# EUROPEAN PATENT SPECIFICATION

(11) **EP 4 061 148 B1**
(45) Date of publication and mention of the grant of the patent: **05.11.2025**
(21) Application number: 19821377.9
(22) Date of filing: 21.11.2019
(51) Int. Cl.: A23L 7/122, A23L 29/30, A23P 20/10

(54) **FOOD PIECES WITH A NON-STICKY ERYTHRITOL COATING**
LEBENSMITTELTEILCHEN MIT EINER NICHTKLEBRIGEN ERYTHRITBESCHICHTUNG
PIÈCES ALIMENTAIRES AVEC UN REVÊTEMENT D'ÉRYTHRITOL NON COLLANT

(43) Date of publication of application: 28.09.2022
(73) Proprietor: General Mills, Inc., Minneapolis, MN 55426 (US)
(72) Inventor: GOEDEKEN, Douglas, L., Blaine, MN 55449 (US); HARPER, Todd, Minneapolis, MN 55410 (US); NOWAKOWSKI, Christine, M., Plymouth, MN 55441 (US); WALTHER, Goeran, Plymouth, MN 55447 (US); WHITMAN, Scott, K., New Hope, MN 55427 (US)
(74) Representative: Novagraaf Group
(86) International application number: PCT/US2019/062548
(87) International publication number: WO 2021/101547

(56) References cited:
- EP-A1- 1 733 629
- WO-A1-2009/036954
- WO-A1-2011/139959
- JP-A- H09 278 671
- US-A1- 2005 266 142
- ANONYMOUS: "Maltodextrin - Wikipedia", 30 August 2019 (2019-08-30), XP055716032, Retrieved from the Internet <URL:https://web.archive.org/web/20190830113649/https://en.wikipedia.org/wiki/Maltodextrin> [retrieved on 20200717]
- FAST R B ET AL: "Breakfast Cereals and How they are made", 1 January 1990, BREAKFAST CEREALS AND HOW THEY ARE MADE, MINNESOTA, AACC, US, PAGE(S) 195 - 220, XP002165120

## Description

### BACKGROUND OF THE INVENTION

The present invention pertains to the art of food production and, more particularly, to coatings containing erythritol.

Cereal products, such as ready-to-eat ("R-T-E") or breakfast cereals, are well-known and popular food items, particularly presweetened R-T-E cereals. Typically, these products include various coatings, usually comprising nutritive carbohydrate sweeteners such as sucrose, corn syrup, dextrose, fructose, high fructose corn syrup, fiber syrups, grain syrups, honey, hydrogenated starch, inulin, molasses, rice syrups, sorghum syrup, *etc.* Also known are presweetened R-T-E cereals comprising coatings that include a high-potency sweetener.

Presweetened breakfast cereals are typically prepared by first producing unsweetened cereal pieces, coating the cereal pieces with an aqueous slurry or solution of sweeteners and then drying the coated pieces in an oven or air current to remove the added moisture.

One problem with sugar-coated R-T-E cereals is the high amount of sugar in the finished product that is necessary to impart sweetness and assist in maintaining the desired texture in milk, referred to as bowl life. As used herein, "sugar" includes mono-and disaccharides, such as glucose, fructose, maltose, lactose and sucrose, but most commonly means sucrose, otherwise known as table sugar. The sugar content of R-T-E cereals can be reduced by substituting sugar with one or more high-potency artificial sweeteners, such as aspartame, saccharin and sucralose, and/or by using natural sweeteners. While useful in reducing the sugar content of R-T-E cereals, the finished products containing such substitutes often suffer from the absence of certain physical and organoleptic attributes provided by the presence of sugar-based coatings. In particular, the products can lack the bite or crispness and bowl life in milk exhibited by sugar coatings and require special packaging to minimize water absorption.

Given the state of the art as described above, there is a continuing need for improved reduced-sugar and sugar-free coatings and for coated comestibles prepared therewith that have physical and organoleptic properties similar to those of coatings with more sugar.

WO 2011/139959 discloses a coated food composition comprising a food product and a coating, wherein the coating comprises a mixture of erythritol and at least one bulking agent, and a method for preparing such a coated food composition. WO 2009/036954 discloses a coated product comprising a core and a hard coating surrounding the core, and a process for preparing such a coated product. The hard coating is composed of at least one coating layer which comprises erythritol and a crystallization modifier.

**SUMMARY OF THE INVENTION** The claimed invention is set out in the appended claims.

The present invention satisfies the above need by providing reduced-sugar and sugar-free coating or binding compositions comprising erythritol, as well as comestibles topically coated or bound with such compositions, such as R-T-E cereals, clusters, cereal bars, and other food products. The present invention also provides methods of making these products.

In its product aspect, the present invention is directed to a packaged food product comprising individual non-sticky coated food pieces which have a moisture content of 2% to about 3.5% by weight. The individual non-sticky coated food pieces include a food piece having a surface and a coating having a crystallinity of about 15% to about 60% on at least a portion of the surface. The coating has a soluble solids content including erythritol, with at least a portion of the erythritol being crystalline erythritol, and a water-soluble carbohydrate having an average dextrose equivalent DE of 4 to 30. The erythritol contributes substantially all the crystallinity of the coating. The erythritol is included in an amount of about 50% to about 90% by dry weight of the soluble solids content, and the water-soluble carbohydrate having an average DE of 4 to 30 is included in an amount of about 2% to 40% by dry weight of the soluble solids content. The packaged food product further comprises a package enclosing the individual non-sticky coated food pieces.

In its method aspect, the present invention is directed to a continuous method of making individual non-sticky coated food pieces. The method comprises applying a composition to a surface of food pieces to produce coated food pieces. The composition includes water and a soluble solids component having a soluble solids content including erythritol in an amount of about 50% to about 90% by dry weight of the soluble solids content. The soluble solids content also includes a water-soluble carbohydrate having an average dextrose equivalent (DE) of 4 to 30 in an amount of about 2% to about 40% by dry weight of the soluble solids content. The method further comprises drying the coated food pieces to form dried pieces having at least a partial coating in which the soluble solids component has a crystallinity of from about 15% to about 60%. The erythritol contributes substantially all the crystallinity of the coating. The dried pieces have a moisture content of 2% to about 3.5% by weight. The dried pieces are cooled to produce the individual non-sticky coated food pieces, which are then packaged.

Additional objects, features and advantages of the invention will become more readily apparent from the following detailed description of preferred embodiments thereof when taken in conjunction with the drawings wherein like reference numerals refer to common parts in the several views.

### BRIEF DESCRIPTION OF THE DRAWINGS

Figure 1 shows a portion of a process for producing ready-to-eat cereal products in accordance with the present invention.
Figure 2 is a graph illustrating the post process stickiness of cereals with coatings containing erythritol.

### DETAILED DESCRIPTION OF THE INVENTION

Any specific numerical value listed herein includes a margin of error of +/- 5%. The term "about" increases the margin of error to 10%. For numerical values expressed as percentages, the margin of error refers to the base numerical value. In other words, "about 20%" means 18-22% and not 10-30%. Furthermore, unless otherwise specified or inapplicable, the percentages given are by weight.

Although the techniques of the present invention can be used in connection with a variety of food products, they will primarily be described below with reference to coated ready-to-eat (R-T-E) or breakfast cereals. However, it should become apparent that the present invention is not limited to such products.

A wide variety of food and snack products are prepared from cooked cereal doughs, including R-T-E or breakfast cereals. Generally, in the preparation of cooked cereal dough, cereal or farinaceous ingredients, such as various cereal flours, are first admixed with other dry ingredients, such as salt, minerals, starch and sugars, to form a dry blend of ingredients. This dry blend is then further blended with various liquid ingredients (including water), heated and worked to gelatinize or cook the starch fraction of the cereal ingredients and other starchy materials. A wide variety of blending, cooking and working apparatuses and techniques are known in the art. More recently, the preparation of cooked cereal dough using a cooker extruder, especially a twin-screw extruder, has become commonplace. The cooked cereal doughs so prepared can be processed to form finished products of various sizes, textures and shapes. Typically, a post-cooking cereal dough formation step involves forming suitably sized and shaped individual pieces, such as shreds, flakes, biscuits or puffs. Thereafter, the finished dried cereal base pieces can have a topical coating applied thereto in order to provide desired taste and texture attributes. For instance, in the preparation of a breakfast cereal, the topical coating can be a sugar or fruit coating.

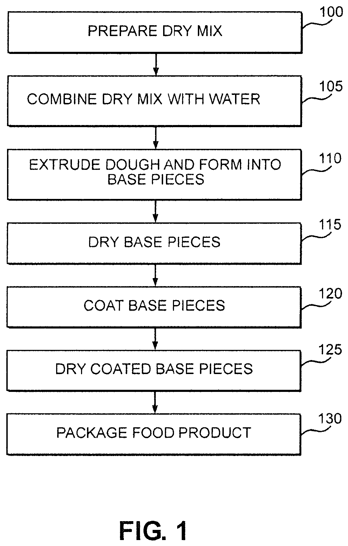

Of particular interest to the present invention is the production of R-T-E cereals that are coated with compositions containing erythritol. With initial reference to Figure 1, a portion of a process for producing R-T-E cereals in accordance with the present invention is shown. At step 100, a dry mix of ingredients is prepared. At step 105, the dry mix is combined with water in a cooker extruder to form a cooked cereal dough. Of course, a variety of additional ingredients can be added to the cooker extruder depending on the desired end product. The process illustrated in Figure 1 is intended to provide a more generic overview given that many different cereal production processes are known in the art. Next, at step 110, the cooked cereal dough is extruded and formed into pieces having a desired size and shape. At step 115, these cereal base pieces are dried. After drying, at step 120, the cereal base pieces are coated with one or more compositions to form coated cereal pieces. At step 125, the coated cereal pieces are dried. The resulting cereal product can then be packaged at step 130.

For the sake of completeness, it should be noted that the dry mix prepared in step 100 can take many forms known in the art, such as being formed with appropriately sized particles of whole grains supplied by any of the major cereal grains including wheat, corn (maize), oats, barley, rye, rice and mixtures thereof. In one form, the dry mix has only fine particles so as to constitute a cereal flour. The dry mix can also include various minor ingredients or additives such as sugar(s), salt and mineral salts (e.g., calcium carbonate, trisodium phosphate, tripotassium phosphate) and starches that can be conveniently pre-blended with the other portions of the dry mix. The dry mix can comprise about 40 to 99% (dry basis) of the cooked cereal dough formed in step 105. In terms of organoleptic attributes and reductions in R-T-E cereal piece frangibility, better results are obtained when the dry mix comprises about 75 to 99% of the cooked cereal dough.

The cereal base pieces formed in step 110 can be of any geometric configuration or form including, for example, flakes or puffs, shreds, biscuits, mini biscuits or the like. The present invention finds particular utility in connection with puffed cereal base pieces. Especially useful are smooth puffed pieces such as O- or ring-shaped pieces fabricated from oat-based cooked cereal doughs. Any conventional method of preparation can be used to provide these puffed cereal base pieces.

For those food products requiring low moisture contents, step 115 would be performed, *i.e.,* that a drying operation be performed prior to coating of the cereal base pieces. Typically, for example, puffed cereal base pieces must be dried to relatively low moisture contents in order to have the desired crispness or frangibility. Thus, when a puffed cereal is used in connection with the present invention, it is preferable to dry the puffed cereal base pieces to a moisture content of less than about 8%, and preferably less than about 6%, prior to the application of the coating in step 120. Any conventional drying technique can be used to reduce the moisture content of the cereal base pieces. The drying can be accomplished using equipment such as a rotary bed, tray or belt dryers. Simple hot air convection drying (at 200 °F to 280 °F (93 °C to 138 °C), for example) is the preferred technique for drying the cereal base pieces. Of course, in certain applications (e.g., when the puffed cereal base pieces are provided by direct expansion from a cooker extruder), the moisture content may be of suitable range without the need for a separate drying step. In other words, step 115 need not always be performed and, typically, is not performed.

During the coating of step 120, the coating (or coatings) can be applied to the cereal base pieces using an enrober (e.g., an enrober drum) while the coating is at an elevated temperature and thus fluid. The coating can be at a temperature between 200 and 300 °F (93 and 149 °C), preferably between 212 and 300 °F (100 and 149 °C), and more preferably between 220 and 270 °F (104 and 132 °C). The coating should preferably be introduced as a fine spray. Any conventional enrobing apparatus and technique can be used in step 120. Generally, one useful technique involves tumbling. The cereal base pieces and coating are added to a rotating drum and tumbled for a sufficient time to achieve an even distribution of the coating on the cereal base pieces. Preferably, the coating is added to the drum after the cereal base pieces. Another useful technique involves spraying the coating over the cereal base pieces in situations where the cereal base pieces are desirably not tumbled due to their shape, frangibility, *etc.*

The coated cereal pieces have a moisture content in the range of 2% to about 3.5%, preferably in the range of 2.5% to about 3%. Conventionally, this is accomplished by subjecting the coated cereal pieces to a drying step. In the present invention, this drying step is represented by step 125, during which the coated cereal pieces are placed in a dryer for a time sufficient to reduce their moisture content to the desired level. Specifically, step 125 serves to remove the moisture added with the one or more coatings of step 120. It should be noted that the moisture content is not arbitrary but rather is surprisingly important in establishing the desired crystallinity as detailed further below.

The resulting cereal product is characterized by a thin coating that is typically about 20 to 40 microns in thickness. If desired, the cereal product can further be fortified with an exterior or topical application of heat-sensitive vitamins. In such a case, a dispersion of one or more vitamins is topically added to the cereal product such as by tumbling to form a vitamin-fortified cereal product. No further drying is required since only a small amount of moisture is added by the topical vitamin application. After the drying of step 125 and the optional vitamin fortification, the cereal product is allowed to cool to ambient temperature and then packaged in a conventional manner in step 130. At this point, it should be noted that any vitamin fortification can actually be applied with the coating in step 120.

For cereals produced by the process described in connection with Figure 1, the relevant coatings, for purposes of the present invention, are those applied to the cereal base pieces in step 120. Typically, one of these coatings would be made using sugar, particularly sucrose. The presence of sugar in cereal coatings is one of the main drivers of consumer preference. However, there is also pressure to reduce the sugar content of food products. In addition to affecting taste or flavor (by providing sweetness), sucrose has at least two other properties that make it useful in a coating. First, sucrose adds bulk. In some cereals, sucrose can account for about one third of the product by weight. Second, sucrose has a propensity to crystallize, which reduces stickiness during both processing and storage. Accordingly, when reducing or eliminating the sucrose content of the coating by substituting one or more other ingredients for some or all of the sucrose, it would be beneficial for these ingredients to have all three of the same properties (at least in combination).

The present invention addresses this issue through the inclusion of erythritol in the coating. In particular, it has been found that erythritol alone has all the desired properties. Erythritol is about 60-70% as sweet as sucrose, adds bulk and has an even greater propensity to crystallize than sucrose. In addition, erythritol is considered a zero-calorie sweetener (although it does have a calorie content of 0.2 calories/gram, as compared to almost 4 calories per gram for sucrose). Thus, substituting erythritol for some or all of the sucrose provides a significant calorie reduction for the coated cereal product, e.g., about 25% or more as detailed further below. Also, erythritol has no glycemic response, is not counted as sugar for the purposes of nutritional labeling (although it is included in the total carbohydrates value), has excellent gastrointestinal tolerance and has a low viscosity in solution. Further, erythritol has a slower wash-off than sucrose, mainly due to reduced solubility at low temperatures, enabling a longer bowl life.

The propensity of erythritol to crystallize is beneficial for reducing the stickiness of a food product coated with either (or both) of these ingredients. This is helpful during both production and storage of the food product. Accordingly, both initial *(i.e.,* time 0) and final crystallinity are important. Sucrose can be employed below 40% without crystallization. Many sucrose substitutes do not crystallize, making erythritol somewhat unique in this respect. In fact, at a given soluble solids ratio, erythritol will have a higher crystallinity than sucrose. This advantageously enables the use of higher levels of other soluble solids, such as soluble corn fiber, without excessive stickiness and, more generally, provides greater flexibility in formulating the coating.

However, erythritol has a lower glass transition temperature (T_{g}) than sucrose. As a result, an erythritol coating can retain a soft or tacky texture immediately after drying and cooling *(i.e.,* at time 0), although the coating hardens and loses tackiness over time as full crystallization is reached (e.g., after 3 or 4 days). To address this issue, a higher molecular weight component, such as 18 dextrose equivalent (DE) modified starch, can be included in the erythritol coating to increase the glass transition temperature and reduce softness or tackiness at time 0. This modified starch can be an enzyme-modified corn starch to reduce chain, and not chemically modified *(e.g.,* by acid hydrolysis). In the alternative, chemically modified maltodextrin could be employed. Preferably, the higher molecular weight component has a DE of 18-24. While lower DE components (< 15) can be effective, the resulting coating is more viscous. Higher DE components (> 30) are not effective. Stated differently, the erythritol coating includes a water-soluble carbohydrate having an average DE of 4 to 30. In a more preferred embodiment, the water-soluble carbohydrate has an average DE of 10 to 24. In one embodiment, the water-soluble carbohydrate is a non-hydrogenated maltodextrin.

The erythritol coating includes a soluble solids content (defined as the water-soluble ingredients of the coating), with the water-soluble carbohydrate making up part of the soluble solids content. The water-soluble carbohydrate is included in an amount of about 2% to about 40% by dry weight of the soluble solids content. In a more preferred embodiment, the water-soluble carbohydrate is included in an amount of 3-35% by dry weight of the soluble solids content. In a most preferred embodiment, the water-soluble carbohydrate is included in an amount of 5-30% by dry weight of the soluble solids content.

The initial *(i.e.,* time 0) stickiness of the erythritol coating is also affected by the crystallinity of the erythritol. The crystallinity of the erythritol is a function, at least in part, of the relative amount of erythritol in the coating. Like the water-soluble carbohydrate, the erythritol makes up part of the soluble solids content of the erythritol coating. The erythritol comprises about 50% to about 90% by dry weight of the soluble solids content. In a more preferred embodiment, the erythritol comprises 55-85% by dry weight of the soluble solids content. In a most preferred embodiment, the erythritol comprises 60-80% by dry weight of the soluble solids content.

The erythritol coating has a crystallinity of about 15% to about 60%, with at least a portion of the erythritol being crystalline erythritol and the erythritol contributing substantially all the crystallinity of the coating. In one embodiment, the erythritol coating has a crystallinity of about 20%. By "substantially all", it is meant that the erythritol contributes at least 95% of the crystallinity of the coating. For purposes of the present invention, a coating's crystallinity equals the total weight of crystals in the coating divided by the total weight of the coating. Similarly, a coating's erythritol crystallinity equals the weight of erythritol crystals in the coating divided by the total weight of the erythritol in the coating. The portion of the crystallinity provided by the erythritol can be calculated by dividing the weight of erythritol crystals in the coating by the total weight of crystals in the coating. In a given sample, crystals of erythritol can be distinguished from other crystals using differential scanning calorimetry, for example.

The initial *(i.e.,* time 0) stickiness of the erythritol coating is further affected by the drying of the coated food pieces *(i.e.,* step 125). Over drying results in reduced time 0 crystallinity and increased time 0 stickiness but has no impact on final crystallinity. As noted above, the coated food pieces are dried to a moisture content in the range of 2% to about 3.5% and preferably in the range of 2.5% to about 3%. Certainly, it should be recognized as counterintuitive that the coating actually gets more sticky with increased drying.

As referenced above, the crystallinity of the coating is affected by various parameters, including moisture content. More specifically, it is the final moisture content which is extremely important in this regard. That is, the pre-drying moisture content of the coating need not affect final crystallinity but may have an effect on initial crystallinity, with initial crystallinity being lower at low moisture contents. Also, crystallinity increases as the level of minors *(i.e.,* non-crystallizable solids) decreases. Certainly, the crystallinity is directly related to the level of stickiness of the final product. To further illustrate these issues and identify acceptable products in accordance with the invention, reference will now be made in comparing the following coating samples:
S1

| | |
|---|---|
| Erythritol | 41.93% |
| Sugar | 19.43% |
| Water | 15.50% |
| Soluble Corn Fiber | 5.50% |
| Soluble Carbohydrate | 7.50% |
| Cinnamon | 2.60% |
| Calcium Carbonate | 2.08% |
| Salt | 0.26% |
| Canola Oil | 5.20% |
| Total | 100.00% |

S2

| | |
|---|---|
| Erythritol | 44.93% |
| Sugar | 19.43% |
| Water | 15.50% |
| Soluble Corn Fiber | 2.50% |
| Soluble Carbohydrate | 7.50% |
| Cinnamon | 2.60% |
| Calcium Carbonate | 2.08% |
| Salt | 0.26% |
| Canola Oil | 5.20% |
| Total | 100.00% |

S3

| | |
|---|---|
| Erythritol | 46.93% |
| Sugar | 12.81% |
| Water | 16.00% |
| Soluble Carbohydrate | 15.00% |
| Cinnamon | 2.50% |
| Salt | 0.26% |
| Canola Oil | 6.50% |
| Total | 100.00% |

S4

| | |
|---|---|
| Erythritol | 47.08% |
| Sugar | 27.66% |
| Water | 16.00% |
| Soluble Carbohydrate | 0.00% |
| Cinnamon | 2.50% |
| Salt | 0.26% |
| Canola Oil | 6.50% |
| Total | 100.00% |

S5

| | |
|---|---|
| Erythritol | 46.93% |
| Sugar | 20.31% |
| Water | 16.00% |
| Soluble Carbohydrate | 7.50% |
| Cinnamon | 2.50% |
| Salt | 0.26% |
| Canola Oil | 6.50% |
| Total | 100.00% |

S6

| | |
|---|---|
| Erythritol | 45.23% |
| Sugar | 19.51% |
| Water | 16.00% |
| Soluble Carbohydrate | 10.00% |
| Cinnamon | 2.50% |
| Salt | 0.26% |
| Canola Oil | 6.50% |
| Total | 100.00% |

S7

| | |
|---|---|
| Erythritol | 43.80% |
| Sugar | 16.03% |
| Water | 15.26% |
| Soluble Carbohydrate | 16.08% |
| Cinnamon | 2.38% |
| Salt | 0.25% |
| Canola Oil | 6.20% |
| Total | 100.00% |

S8

| | |
|---|---|
| Erythritol | 50.00% |
| Sugar | 17.24% |
| Water | 16.00% |
| Soluble Carbohydrate | 7.50% |
| Cinnamon | 2.50% |
| Salt | 0.26% |
| Canola Oil | 6.50% |
| Total | 100.00% |

S9

| | |
|---|---|
| Erythritol | 45.03% |
| Sugar | 12.21% |
| Water | 16.00% |
| Soluble Carbohydrate | 17.50% |
| Cinnamon | 2.50% |
| Salt | 0.26% |
| Canola Oil | 6.50% |
| Total | 100.00% |

S10

| | |
|---|---|
| Erythritol | 42.63% |
| Sugar | 12.11% |
| Water | 16.00% |
| Soluble Carbohydrate | 20.00% |
| Cinnamon | 2.50% |
| Salt | 0.26% |
| Canola Oil | 6.50% |
| Total | 100.00% |

While keeping in mind that the erythritol is the only ingredient in these coatings which crystallizes and an 18 DE soluble carbohydrate was used for purposes of this sample data, the coatings have associated therewith the following measured characteristics:

| Coating Sample | | | Coating Crystallinity % | | Stickiness Scores | |
|---|---|---|---|---|---|---|
| | *E/SS | Soluble Carbohydrate% | Time 0 | Final | Time 0 | Final |
| S1 | 0.55 | 7.5% | 18% | 28% | 5.0 | 1.0 |
| S2 | 0.59 | 7.5% | 21% | 30% | 4.0 | 1.0 |
| S3 | 0.61 | 15.0% | 27% | 37% | 1.0 | 1.0 |
| S4 | 0.61 | 0.0% | 23% | 36% | 4.0 | 1.0 |
| S5 | 0.61 | 7.5% | 23% | 37% | 3.0 | 1.0 |
| S6 | 0.59 | 10.0% | 20% | 35% | 3.5 | 1.0 |
| S7 | 0.57 | 16.0% | 21% | 33% | 3.0 | 1.0 |
| S8 | 0.65 | 7.5% | 24% | 40% | 1.0 | 1.0 |
| S9 | 0.59 | 17.5% | 22% | 34% | 1.0 | 1.0 |
| S10 | 0.56 | 20.0% | 17% | 32% | 2.0 | 1.0 |

| | | | | | | |
|---|---|---|---|---|---|---|
| * Erythritol to soluble solids ratio | | | | | | |

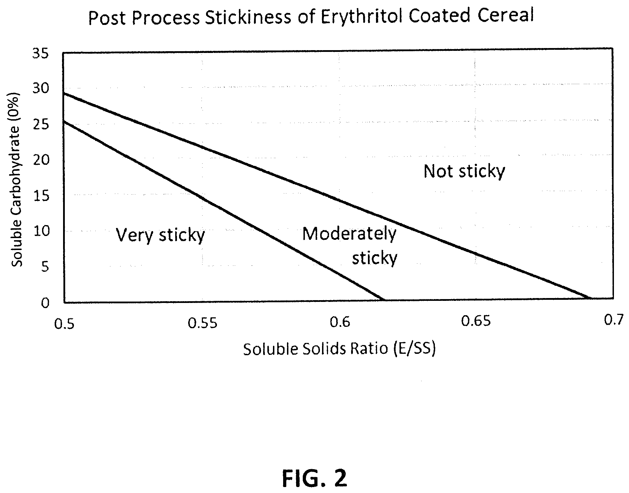

As evidenced by the above chart, a consistent final stickiness score can be achieved, but it is the variance in the stickiness at Time 0 which is of interest here. Based on this and related data, it has been found that essentially linear relationships follow in determining stickiness as a function of a soluble solids ratio and a soluble carbohydrate percentage. Figure 2 presents a graph for use in connection with establishing acceptable coatings in accordance with the invention. Certainly, the invention desires to establish non-sticky coated cereal pieces, although moderately sticky pieces may be considered acceptable. Certainly, the very sticky region of this graph represents an unsatisfactory coating. In essence, scores of 4 and 5 were just too sticky; scores of 2 and 3 were moderately sticky; and a score of 1 was deemed not sticky in accordance with the invention.

At this point, with regard to defining stickiness scores at Time 0, it should be noted that this represents a qualitative measure of cohesiveness determined by manually compressing a handful of coated cereal pieces for 5 seconds and then releasing the pressure by opening of the hands. Of course, a corresponding machine test could be employed. In any event, the stickiness score was then established based on how the cereal pieces fall apart with:
1 - not cohesive at all (no tendency to stick together)
2 - slightly cohesive (weakly cohesive, falls apart within 1-5 seconds)
3 - moderately cohesive (falls apart within 5-10 seconds)
4 - cohesive (falls apart within 10-20 seconds)
5 - very cohesive (pieces remain stuck together in a ball)

It is important in connection with the overall invention to establish a non-sticky coating for food pieces. As evidenced by the above chart, a final stickiness score was determined for the various coating samples applied to cereal pieces. Again, scores of 4 and 5 were just too sticky; scores of 2 and 3 were moderately sticky; and a score of 1 was deemed not sticky in accordance with the invention. With regard to defining final stickiness scores, it should be noted that this represents a qualitative measure of cohesiveness determined by the following method:
- Coat, dry, and package product.
- Store for at least 2 weeks at ambient temperature
- Put about 50 g of product in 4 inch x 4 inch (10.2 x 10.2 cm) shallow plastic trays
- Place trays in controlled environment chamber set to 100 °F (38 °C) and 38% relative humidity for at least 24 hr
- Remove trays from chamber and allow to cool to ambient temperature, about 30 min
- Tilt trays to pour product onto flat surface and assign stickiness score as follows
   1. Free flowing, no visible sticking
   2. Slight stickiness, requires steeper angle to flow, but eventually becomes free flowing
   3. Product comes off tray as one large piece and requires slight tapping force to break apart
   4. Product comes off tray as one large piece and requires moderate tapping force to break apart
   5. Product comes off tray as one large piece and requires significant tapping force to break apart, individual cereal pieces often fracture rather than breaking apart

In some embodiments, the soluble solids component of the erythritol coating further comprises a sugar source in an amount of up to about 40% by dry weight of the soluble solids content, preferably 1-30%. The sugar source can be, for example, sucrose, honey, fructose, a syrup (e.g., corn syrup) or molasses. In other embodiments, neither the erythritol coating nor the final food product has any sugar content *(i.e.,* there is no sugar content).

The erythritol coating can comprise a water-insoluble ingredient (e.g., calcium carbonate, insoluble fiber, insoluble proteins, *etc.)* or a semi-soluble ingredient *(e.g.,* cocoa or cinnamon) in an amount of up to 10% by weight of the coating, preferably up to 5%. The coating can also comprise a soluble fiber *(e.g.,* inulin, soluble corn fiber, *etc.)* or a soluble protein. In one embodiment, the coating comprises about 5.5% soluble corn fiber by weight. The coating can further comprise water. In a preferred embodiment, the coating comprises about 12% to about 30% water by weight. In a more preferred embodiment, the coating comprises up to 15-26% water by weight. The coating can also comprise an oil, which primarily serves as a processing aid. In a preferred embodiment, the coating comprises up to 10% by weight of an oil or a fat.

Overall, the goal is to produce non-sticky *(i.e.,* non-adhesive, non-cohesive) coated food pieces comprising a plurality of food pieces, each food piece having a surface, with the above-discussed coating or composition provided on at least a portion of the surface. The food piece and coating have a combined moisture content of about 2% to about 3.5%. Also, the coating can comprise about 10% to about 50% by weight of the coated food pieces after the drying step and before the cooling step. In a preferred embodiment, the coating comprises 15-50% by weight of the coated food pieces. In a more preferred embodiment, the coating comprises 20-40% by weight of the coated food pieces. The food pieces can take a number of different forms including R-T-E cereal pieces, nuts, puffed corn, *etc.*

Preferably, the cooling step cools the coated food pieces to a surface temperature of less than 90 °F (32 °C), more preferably less than 75 °F (24 °C). These food pieces can be packaged together in a package, with or without other food pieces. That is, the food pieces of the present invention can be combined with food pieces not produced in the manner described above. For example, puffed cereal base pieces having an erythritol coating can be combined with nuts, seeds, grain-based pieces, legume-based pieces, dried fruits, confectionary pieces or another type of cereal base piece. Preferably, the coated food pieces are packaged within 5 hours of the drying step, more preferably less than 90 minutes (with a surge bin) and as short as a few minutes (without a surge bin). The coated food pieces are non-sticky *(i.e.,* non-adhesive, non-cohesive) immediately (actually within 10 minutes) after cooling, which facilitates packaging soon after cooling.

In some embodiments, the method of the present invention comprises a step of applying a fat-based coating to the erythritol coating. In some embodiments, the method comprises a step of applying a powder to the coating. In some embodiments, the method comprises a step of applying particulates to the coating to adhere the particulates to the dried pieces prior to the cooling step.

Based on the above, it should be readily apparent that the present invention provides improved reduced-sugar and sugar-free coatings, and coated comestibles prepared therewith, that have physical and organoleptic properties similar to those of coatings with more sugar. By having reduced sugar, products with a lower calorie content can be beneficially prepared. For instance, a RTE cereal product with a 25% or less net carbohydrate content can be prepared.

## Claims

1. A continuous method of making individual non-sticky coated food pieces, the method comprising:
a. applying a composition to a surface of food pieces to produce coated food pieces, the composition including
i. a soluble solids component having a soluble solids content including erythritol in an amount of about 50% to about 90% by dry weight of the soluble solids content and a water-soluble carbohydrate having an average dextrose equivalent (DE) of 4 to 30 in an amount of about 2% to about 40% by dry weight of the soluble solids content; and
ii. water;
b. drying the coated food pieces to form dried pieces having at least a partial coating in which the soluble solids component has a crystallinity of from about 15% to about 60%, the erythritol contributing substantially all the crystallinity of the coating, wherein the dried pieces have a moisture content of 2% to about 3.5% by weight; and
c. cooling the dried pieces to produce the individual non-sticky coated food pieces.

2. The continuous method of claim 1, wherein the moisture content is 2.5% to about 3% by weight.

3. The continuous method of any of claims 1 or 2, wherein the coating comprises about 10% to about 50% by weight of the coated food pieces after the drying step and before the cooling step.

4. The continuous method of any one of claims 1-3, wherein the cooling step cools the coated food pieces to a surface temperature of less than 90 °F (approximately 32.2 °C).

5. The continuous method of any one of claims 1-4, wherein the water-soluble carbohydrate is a non-hydrogenated maltodextrin.

6. The continuous method of any one of claims 1-5, wherein the soluble solids component further comprises a sugar source in an amount of up to 40% by dry weight of the soluble solids content.

7. The continuous method of any one of claims 1-6, wherein the composition further comprises an oil in an amount of up to 10% by weight of the composition; and/or a water insoluble or semi-soluble ingredient in an amount of up to 10% by weight of the composition; and/or at least one of a soluble fiber and a soluble protein.

8. The continuous method of any one of claims 1-7, further comprising applying particulates to the coating to adhere the particulates to the dried pieces prior to the cooling step.

9. The continuous method of any one of claims 1-8, further comprising combining the individual non-sticky coated food pieces with one or more other food pieces.

10. The continuous method of claim 9, wherein the one or more other food pieces comprise nuts, seeds, grain-based pieces, legume-based pieces, dried fruits, or confectionary pieces.

11. The continuous method of any of claims 1-10, further comprising packaging the individual non-sticky coated food pieces, wherein the individual non-sticky coated food pieces are packaged within 5 hours of the drying step.

12. The continuous method of claim 11, wherein packaging occurs within 10 minutes after cooling.

13. A product obtainable by the continuous method according to any one of claims 1-12.

14. A packaged food product comprising:
a. individual non-sticky coated food pieces have a moisture content of 2% to about 3.5% by weight, the individual non-sticky coated food pieces including:
i. a food piece having a surface, and
ii. a coating having a crystallinity of about 15% to about 60% on at least a portion of the surface, the coating having a soluble solids content including erythritol, with at least a portion of the erythritol being crystalline erythritol and a water-soluble carbohydrate having an average dextrose equivalent (DE) of 4 to 30, the erythritol contributing substantially all the crystallinity of the coating, wherein the erythritol is included in an amount of about 50% to about 90% by dry weight of the soluble solids content, and the water-soluble carbohydrate having an average DE of 4 to 30 is included in an amount of about 2% to about 40% by dry weight of the soluble solids content; and
b. a package enclosing the individual non-sticky coated food pieces.

15. The packaged food product of claim 14, wherein the coating further comprises a water-insoluble or semi-soluble ingredient up to 10% by weight.

16. The packaged food product of any one of claims 14 or 15, wherein the coating further comprises a soluble fiber up to 10% by weight.

17. The packaged food product of any one of claims 14-16, wherein the water-soluble carbohydrate is a non-hydrogenated maltodextrin.

18. The packaged food product of any one of claims 14-17, wherein the packaged food product is a ready-to-eat (R-T-E) cereal having no sugar content.

19. The packaged food product of any one of claims 14-18, wherein the soluble solids content comprises a sugar source in an amount of up to about 40% by dry weight of the soluble solids content.

## Patentansprüche

1. Kontinuierliches Verfahren zum Herstellen einzelner, nicht klebriger, beschichteter Nahrungsmittelstücke, wobei das Verfahren umfasst:
a. Aufbringen einer Zusammensetzung auf eine Oberfläche von Nahrungsmittelstücken, um beschichtete Nahrungsmittelstücke herzustellen, wobei die Zusammensetzung umfasst:
i. eine lösliche Feststoffkomponente mit einem löslichen Feststoffgehalt, die Erythrit in einer Menge von etwa 50 % bis etwa 90 % des Trockengewichts des löslichen Feststoffgehalts und ein wasserlösliches Kohlenhydrat mit einem durchschnittlichen Dextroseäquivalent (DE) von 4 bis 30 in einer Menge von etwa 2 % bis etwa 40 % des Trockengewichts des löslichen Feststoffgehalts enthält; und
ii. Wasser;
b. Trocknen der beschichteten Nahrungsmittelstücke, um getrocknete Stücke mit zumindest einer teilweisen Beschichtung zu bilden, in der die lösliche Feststoffkomponente eine Kristallinität von etwa 15 % bis etwa 60 % aufweist, wobei das Erythrit im Wesentlichen die gesamte Kristallinität der Beschichtung beiträgt, wobei die getrockneten Stücke einen Feuchtigkeitsgehalt von 2 Gew.-% bis etwa 3,5 Gew.-% aufweisen; und
c. Abkühlen der getrockneten Stücke, um die einzelnen, nicht klebrig beschichteten Nahrungsmittelstücke herzustellen.

2. Kontinuierliches Verfahren nach Anspruch 1, wobei der Feuchtigkeitsgehalt 2,5 Gew.-% bis etwa 3 Gew.-% beträgt.

3. Kontinuierliches Verfahren nach einem der Ansprüche 1 oder 2, wobei die Beschichtung nach dem Trocknungsschritt und vor dem Abkühlschritt etwa 10 Gew.-% bis etwa 50 Gew.-% der beschichteten Nahrungsmittelstücke ausmacht.

4. Kontinuierliches Verfahren nach einem der Ansprüche 1 bis 3, wobei der Abkühlschritt die beschichteten Nahrungsmittelstücke auf eine Oberflächentemperatur von weniger als 90 °F (etwa 32,2 °C) abkühlt.

5. Kontinuierliches Verfahren nach einem der Ansprüche 1 bis 4, wobei das wasserlösliche Kohlenhydrat ein nicht hydriertes Maltodextrin ist.

6. Kontinuierliches Verfahren nach einem der Ansprüche 1 bis 5, wobei die lösliche Feststoffkomponente ferner eine Zuckerquelle in einer Menge von bis zu 40 % des Trockengewichts des löslichen Feststoffgehalts umfasst.

7. Kontinuierliches Verfahren nach einem der Ansprüche 1 bis 6, wobei die Zusammensetzung ferner ein Öl in einer Menge von bis zu 10 Gew.-% der Zusammensetzung und/oder einen wasserunlöslichen oder halblöslichen Bestandteil in einer Menge von bis zu 10 Gew.-% der Zusammensetzung und/oder mindestens eines von einem löslichen Ballaststoff und einem löslichen Protein umfasst.

8. Kontinuierliches Verfahren nach einem der Ansprüche 1 bis 7, ferner umfassend das Aufbringen von Partikeln auf die Beschichtung, um die Partikel vor dem Abkühlschritt an den getrockneten Stücken anzuheften.

9. Kontinuierliches Verfahren nach einem der Ansprüche 1 bis 8, ferner umfassend das Kombinieren der einzelnen, nicht klebrig beschichteten Nahrungsmittelstücke mit einem oder mehreren anderen Nahrungsmittelstücken.

10. Kontinuierliches Verfahren nach Anspruch 9, wobei das eine oder die mehreren anderen Nahrungsmittelstücke Nüsse, Samen, Stücke auf Getreidebasis, Stücke auf Hülsenfruchtbasis, Trockenfrüchte oder Süßwarenstücke umfassen.

11. Kontinuierliches Verfahren nach einem der Ansprüche 1 bis 10, ferner umfassend das Verpacken der einzelnen, nicht klebrig beschichteten Nahrungsmittelstücke, wobei die einzelnen, nicht klebrig beschichteten Nahrungsmittelstücke innerhalb von 5 Stunden nach dem Trocknungsschritt verpackt werden.

12. Kontinuierliches Verfahren nach Anspruch 11, wobei das Verpacken innerhalb von 10 Minuten nach dem Abkühlen erfolgt.

13. Produkt, das durch das kontinuierliche Verfahren nach einem der Ansprüche 1 bis 12 erhältlich ist.

14. Verpacktes Nahrungsmittelprodukt, umfassend:
a. einzelne nicht klebrig beschichtete Nahrungsmittelstücke mit einem Feuchtigkeitsgehalt von 2 Gew.-% bis etwa 3,5 Gew.-%, wobei die einzelnen nicht klebrig beschichteten Nahrungsmittelstücke umfassen:
i. ein Nahrungsmittelstück mit einer Oberfläche und
ii. eine Beschichtung mit einer Kristallinität von etwa 15 % bis etwa 60 % auf mindestens einem Teil der Oberfläche, wobei die Beschichtung einen löslichen Feststoffgehalt einschließlich Erythrit aufweist, wobei mindestens ein Teil des Erythrits kristallines Erythrit und ein wasserlösliches Kohlenhydrat mit einem durchschnittlichen Dextroseäquivalent (DE) von 4 bis 30 ist, wobei das Erythrit im Wesentlichen die gesamte Kristallinität der Beschichtung beiträgt, wobei das Erythrit in einer Menge von etwa 50 % bis etwa 90 % des Trockengewichts des löslichen Feststoffgehalts enthalten ist und das wasserlösliche Kohlenhydrat mit einem durchschnittlichen DE von 4 bis 30 in einer Menge von etwa 2 % bis etwa 40 % des Trockengewichts des löslichen Feststoffgehalts enthalten ist; und
b. eine Verpackung, die die einzelnen, nicht klebrig beschichteten Nahrungsmittelstücke umschließt.

15. Verpacktes Nahrungsmittelprodukt nach Anspruch 14, wobei die Beschichtung ferner bis zu 10 Gew.-% eines wasserunlöslichen oder halblöslichen Bestandteils umfasst.

16. Verpacktes Nahrungsmittelprodukt nach einem der Ansprüche 14 oder 15, wobei die Beschichtung ferner bis zu 10 Gew.-% lösliche Ballaststoffe umfasst.

17. Verpacktes Nahrungsmittelprodukt nach einem der Ansprüche 14 bis 16, wobei das wasserlösliche Kohlenhydrat ein nicht hydriertes Maltodextrin ist.

18. Verpacktes Nahrungsmittelprodukt nach einem der Ansprüche 14 bis 17, wobei das verpackte Nahrungsmittelprodukt ein verzehrfertiges (ready-to-eat, RTE) Getreideprodukt ohne Zuckergehalt ist.

19. Verpacktes Nahrungsmittelprodukt nach einem der Ansprüche 14 bis 18, wobei der Gehalt an löslichen Feststoffen eine Zuckerquelle in einer Menge von bis zu etwa 40 % des Trockengewichts des Gehalts an löslichen Feststoffen umfasst.

## Revendications

1. Procédé continu d'élaboration de morceaux individuels d'aliments enrobés non collants, le procédé comprenant :
a. l'application d'une composition sur une surface de morceaux d'aliments afin de produire des morceaux d'aliments enrobés, la composition comportant
i. un composant solides solubles ayant une teneur en solides solubles comportant de l'érythritol dans une quantité d'environ 50 % à environ 90 % en poids sec de la teneur en solides solubles et un hydrate de carbone soluble dans l'eau ayant une équivalence en dextrose (DE) moyenne de 4 à 30 dans une quantité d'environ 2 % à environ 40 % en poids sec de la teneur en solides solubles ; et
ii. de l'eau ;
b. le séchage des morceaux d'aliments enrobés afin de former des morceaux séchés ayant au moins un enrobage partiel dans lequel le composant solides solubles a une cristallinité d'environ 15 % à environ 60 %, l'érythritol contribuant à la quasi-totalité de la cristallinité de l'enrobage, dans lequel les morceaux séchés ont une teneur en humidité de 2 % à environ 3,5 % en poids ; et
c. le refroidissement des morceaux séchés afin de produire les morceaux individuels d'aliments enrobés non collants.

2. Procédé continu selon la revendication 1, dans lequel la teneur en humidité va de 2,5 % à environ 3 % en poids.

3. Procédé continu selon l'une quelconque des revendications 1 ou 2, dans lequel l'enrobage représente d'environ 10 % à environ 50 % en poids des morceaux d'aliments enrobés après l'étape de séchage et avant l'étape de refroidissement.

4. Procédé continu selon l'une quelconque des revendications 1 à 3, dans lequel l'étape de refroidissement refroidit les morceaux d'aliments enrobés jusqu'à une température de surface inférieure à 90 °F (environ 32,2 °C).

5. Procédé continu selon l'une quelconque des revendications 1 à 4, dans lequel l'hydrate de carbone soluble dans l'eau est une maltodextrine non hydrogénée.

6. Procédé continu selon l'une quelconque des revendications 1 à 5, dans lequel le composant solides solubles comprend en outre une source de sucre dans une quantité allant jusqu'à 40 % en poids sec de la teneur en solides solubles.

7. Procédé continu selon l'une quelconque des revendications 1 à 6, dans lequel la composition comprend en outre une huile dans une quantité allant jusqu'à 10 % en poids de la composition ; et/ou un ingrédient insoluble ou semi-soluble dans l'eau dans une quantité allant jusqu'à 10 % en poids de la composition ; et/ou au moins l'une parmi une fibre soluble et une protéine soluble.

8. Procédé continu selon l'une quelconque des revendications 1 à 7, comprenant en outre l'application de particules sur l'enrobage afin de faire adhérer les particules aux morceaux séchés avant l'étape de refroidissement.

9. Procédé continu selon l'une quelconque des revendications 1 à 8, comprenant en outre l'association des morceaux individuels d'aliments enrobés non collants avec un ou plusieurs autres morceaux d'aliments.

10. Procédé continu selon la revendication 9, dans lequel le ou les autres morceaux d'aliments comprennent des fruits à coque, des graines, des morceaux à base de céréales, des morceaux à base de légumineuses, des fruits secs ou des morceaux de confiserie.

11. Procédé continu selon l'une quelconque des revendications 1 à 10, comprenant en outre l'emballage des morceaux individuels d'aliments enrobés non collants, dans lequel les morceaux individuels d'aliments enrobés non collants sont emballés dans les 5 heures suivant l'étape de séchage.

12. Procédé continu selon la revendication 11, dans lequel l'emballage a lieu dans les 10 minutes suivant le refroidissement.

13. Produit pouvant être obtenu par le procédé continu selon l'une quelconque des revendications 1 à 12.

14. Produit alimentaire emballé comprenant :
a. des morceaux individuels d'aliments enrobés non collants ayant une teneur en humidité de 2 % à environ 3,5 % en poids, les morceaux individuels d'aliments enrobés non collants comportant :
i. un morceau d'aliment ayant une surface, et
ii. un enrobage ayant une cristallinité d'environ 15 % à environ 60 % sur au moins une partie de la surface, l'enrobage ayant une teneur en solides solubles comportant de l'érythritol, une partie au moins de l'érythritol étant de l'érythritol cristallin, et un hydrate de carbone soluble dans l'eau ayant une équivalence en dextrose (DE) moyenne de 4 à 30, l'érythritol contribuant à la quasi-totalité de la cristallinité de l'enrobage, dans lequel l'érythritol est présent dans une quantité d'environ 50 % à environ 90 % en poids sec de la teneur en solides solubles, et l'hydrate de carbone soluble dans l'eau ayant une DE moyenne de 4 à 30 est présent dans une quantité d'environ 2 % à environ 40 % en poids sec de la teneur en solides solubles ; et
b. un emballage renfermant les morceaux individuels d'aliments enrobés non collants.

15. Produit alimentaire emballé selon la revendication 14, dans lequel l'enrobage comprend en outre un ingrédient insoluble ou semi-soluble dans l'eau jusqu'à 10 % en poids.

16. Produit alimentaire emballé selon l'une quelconque des revendications 14 ou 15, dans lequel l'enrobage comprend en outre une fibre soluble jusqu'à 10 % en poids.

17. Produit alimentaire emballé selon l'une quelconque des revendications 14 à 16, dans lequel l'hydrate de carbone soluble dans l'eau est une maltodextrine non hydrogénée.

18. Produit alimentaire emballé selon l'une quelconque des revendications 14 à 17, dans lequel le produit alimentaire emballé est une céréale prête à la consommation (R-T-E) n'ayant aucune teneur en sucre.

19. Produit alimentaire emballé selon l'une quelconque des revendications 14 à 18, dans lequel la teneur en solides solubles comprend une source de sucre dans une quantité allant jusqu'à environ 40 % en poids sec de la teneur en solides solubles.
